# EUROPEAN PATENT APPLICATION

(11) **EP 4 749 659 A1**
(43) Date of publication of application: **27.05.2026**
(21) Application number: 25165752.4
(22) Date of filing: 24.03.2025
(51) Int. Cl.: G21C 7/117, G21C 9/027

(54) **CONTROL ROD ASSEMBLY WITH ENHANCED CONTROL ROD WORTH USING HIGHLY ENRICHED B4C**

(30) Priority: 21.11.2024 KR 20240167053
(71) Applicant: KEPCO NUCLEAR FUEL CO., LTD., Daejeon 34057 (KR)
(72) Inventor: CHOI, Dae Woon, 34074 Daejeon (KR); HA, Dong Geun, 34023 Daejeon (KR); LEE, Shin Ho, 34119 Daejeon (KR); KIM, Seong Soo, 34130 Daejeon (KR); RYU, Joo Young, 34022 Daejeon (KR); KIM, Kyounghong, 34040 Daejeon (KR); LEE, Hak In, 30150 Sejong (KR); CHUN, Joo Hong, 49520 Busan (KR); KIM, Ba Leum, 30141 Sejong-si (KR); YOON, Ju Yeob, 34130 Daejeon (KR); SONG, Han Seung, 34070 Daejeon (KR); YU, Ho Sung, 34022 Daejeon (KR)
(74) Representative: De Vries & Metman

(57) **Abstract**

Proposed is a control rod assembly used in a reactor of a nuclear power plant and, more particularly, a control rod assembly with enhanced control rod worth using highly enriched B₄C and for enhancing core safety under boron-free operation and top-mounted in-reactor instrumentation (TM-ICI) conditions, wherein the control rod assembly includes shutdown group neutron absorbers made of B₄C comprising B-10 is enriched to at least 70%.

## Description

### CROSS REFERENCE TO RELATED APPLICATION

The present application claims priority to Korean Patent Application No. 10-2024-0167053, filed November 21, 2024, the entire contents of which are incorporated herein for all purposes by this reference.

### BACKGROUND

### Technical Field

The present disclosure relates to a control rod assembly used in a reactor of a nuclear power plant and, more particularly, to a control rod assembly with enhanced control rod worth using highly enriched B₄C and for enhancing core safety under boron-free operation and top-mounted in-reactor instrumentation (TM-ICI) conditions.

### Description of the Related Art

Control of core reactivity in a nuclear reactor has been performed through control rods and boron diluted in coolant. Boron has acted as a toxic substance in the coolant, causing adverse effects such as crud deposition, thereby adversely affecting the nuclear fuel and main core equipment. Boron has acted as a toxic substance in the coolant, leading to adverse effects such as crud deposition, which in turn has negatively impacted the nuclear fuel and main core equipment. To solve this problem, boron-free operation has been studied, and under boron-free conditions, the reactivity should be controlled only by the control rods.

In conventional technology, Ag-In-Cd (AIC) alloy has been used for a control group, and natural B₄C (B-10 enrichment 19.8%) has been used for a shutdown control group. However, when applying top-mounted in-core instrumentation (TM-ICI), it is difficult to secure sufficient shutdown control function as the number of control rods that may be installed in the core decreases.

The foregoing is intended merely to aid in the understanding of the background of the present disclosure, and is not intended to mean that the present disclosure falls within the purview of the related art that is already known to those skilled in the art.

### Documents of Related Art

### [Patent Document]

Patent Document: Korean Patent Publication No. 10-2023-0151801 A (Published on November 02, 2023)

### SUMMARY

Accordingly, the present disclosure has been made keeping in mind the above problems occurring in the related art, and the present disclosure is intended to provide a control rod assembly that may secure sufficient shutdown control function with a reduced number of control rods even when applying a top-mounted core instrument (TM-ICI) in a boric acid-free core, thereby improving core stability.

In order to achieve the objectives of the present disclosure as described above, a control rod assembly according to the present disclosure may include: shutdown group neutron absorbers made of B₄C comprising B-10 enriched to at least 70%.

B-10 enrichment of the neutron absorber may be 95%.

The control rod assembly may be used under boric acid-free operating conditions.

As described above, a control rod assembly according to the present disclosure may include a shutdown group neutron absorber made of B₄C with at least 90% B-10 enrichment. This design increases the control rod worth compared to existing rods using natural B₄C, enhances the core subcriticality margin, and ensures compatibility with boron-free core conditions and TM-ICI.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a front view showing a control rod assembly according to an embodiment of the present disclosure; and
FIG. 2 is a graph showing changes in a reactor effective multiplication factor keff under each of ARI and N-1 conditions according to changes in B-10 concentration.

### DETAILED DESCRIPTION

Specific structural or functional descriptions presented in the embodiments of the present disclosure are merely exemplified for the purpose of explaining embodiments according to the concept of the present disclosure, and embodiments according to the concept of the present disclosure may be implemented in various forms. In addition, the descriptions presented should not be construed as being limited to the embodiments described in the present specification but should be understood to include all modifications, equivalents, or substitutes included in the spirit and scope of the present disclosure.

Meanwhile, the terms used in this specification are only used to describe specific embodiments and are not intended to limit the present disclosure. Singular expressions include plural expressions unless the context clearly indicates otherwise. It should be understood that the terms "comprise" or "have" as used herein are intended to specify the presence of an implemented feature, number, step, operation, component, part, or combination thereof, but do not exclude in advance the possibility of the presence or addition of one or more other features, numbers, steps, operations, components, parts, or combinations thereof.

Hereinafter, embodiments of the present disclosure will be described in detail with reference to the accompanying drawings.

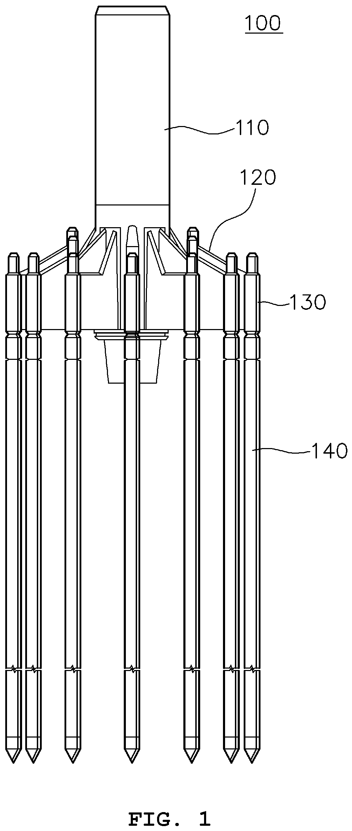

FIG. 1 is a front view showing a control rod assembly according to an embodiment of the present disclosure.

With reference to FIG. 1, the control rod assembly 100 of the present embodiment includes a plurality of spider vanes 120 provided radially on a plane that is perpendicular to a spider body 110, and each spider vane 120 has a control rod 140 fixed to it. In addition, each spider vane 120 is provided with a finger 130 to which an upper end of the control rod 140 is assembled.

Meanwhile, when applying boron-free operation and top-mounted in-core instrumentation (TM-ICI), the control rod worth for shutting down the reactor increases, while the number of control rods that may be installed decreases.

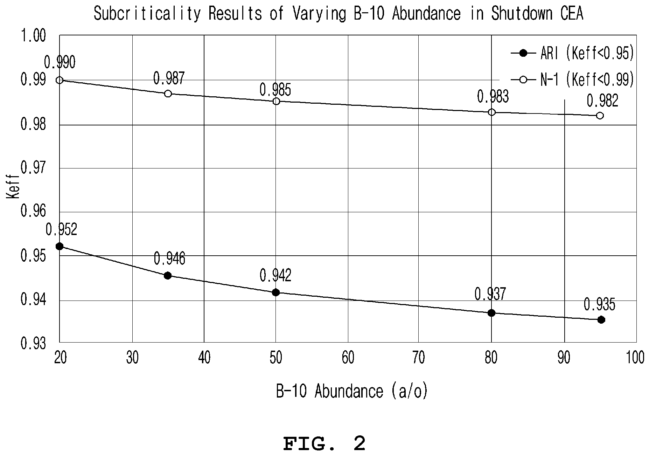

FIG. 2 is a graph showing changes in a reactor effective multiplication factor keff under each of ARI and N-1 conditions according to changes in B-10 concentration. The X-axis, B-10 abundance, represents a concentration ratio of B-10, and the Y-axis, keff, represents the reactor effective multiplication factor keff that is important in the nuclear fission system. The effective multiplication factor keff describes how close the system is to a critical state. When keff = 1, it is a condition where the chain reaction is able to continue in a critical state, keff < 1 indicates a subcritical state, and keff > 1 indicates a supercritical state.

As the B-10 concentration increases, the keff value decreases. As the B-10 concentration increases, the system gets closer to a subcritical state as B-10 absorbs neutrons and prevents a fission chain reaction.

"ARI, which stands for All Rods In," refers to a state where all control rods in the reactor are fully inserted. In this state, the reactor is in the most stable subcritical state, and when the control rods are inserted, they absorb neutrons and suppress the chain reaction, so the reactor works in the direction of stopping or reducing the chain reaction.

The ARI state is an important condition for safely shutting down or maintaining the reactor. In this graph, the keff of the ARI shows a decreasing trend as the B-10 concentration increases, which indicates that the subcritical state is maintained more safely as the B-10 concentration increases with all control rods inserted.

**"N-1"** refers to a state in which one control rod is removed, indicating the reactor's condition when only one of many control rods is withdrawn. The N-1 state is typically used for stability testing or evaluating safety margins and to assess whether the system may maintain a stable subcritical state even when one control rod fails to insert.

The keff value in the N-1 state tends to be higher than in the ARI state. As shown in FIG. 2, when the B-10 concentration increases in the N-1 state, keff decreases slightly, demonstrating that safety is maintained even when one control rod is withdrawn, as B-10 plays a crucial role in neutron absorption.

As shown in FIG. 2, applying concentrated B₄C improves the control rod's performance compared to natural B₄C. When the concentration reaches at least 30%, it satisfies the subcritical condition even under boric acid-free conditions. Taking into account the density tolerance of the B₄C sintered body, the B₄C concentration tolerance, and the uncertainty in the analysis, it is concluded that the subcritical condition is satisfied when the B-10 concentration reaches at least 70%. Therefore, the present disclosure further improves the control rod worth by increasing the B-10 concentration to at least 70%. Furthermore, the concentration of B-10 may be set to 95%. An evaluation is conducted using B₄C with 95% B-10 enrichment, taking into account various control rod specifications. The subcriticality evaluation results for each control rod (or finger) are shown in [Table 1] below.

**[Table 1]**

| Control rod specification | Case | ARI | N-1 |
|---|---|---|---|
| 24 fingers | Case 1 | 0.94740 | 0.98697 |
| | Case 2 | 0.94463 | 0.97641 |
| 28 fingers | Case 1 | 0.93766 | 0.98492 |
| | Case 2 | 0.94610 | 0.974311 |

As shown in [Table 1], the control rods using B₄C with 95% B-10 enrichment meet the subcriticality criteria under both ARI and N-1 conditions, demonstrating a significant improvement in core safety. In particular, both the 24 and 28 control rods have demonstrated better performance compared to the existing natural B₄C application.

The control rod assembly utilizing highly concentrated B₄C in this way improves control rod worth by approximately 17% compared to natural B₄C and ensures sufficient reactivity control even under boric acid-free operating conditions.

The present disclosure is not limited to the described embodiments and accompanying drawings. Various substitutions, modifications, and changes may be made without departing from its technical spirit, as will be apparent to those skilled in the art.

## Claims

1. A control rod assembly with improved rod worth, the control rod assembly comprising:
shutdown group neutron absorbers made of B₄C comprising B-10 enriched to at least 70%.

2. The control rod assembly of claim 1, wherein B-10 enrichment of the neutron absorber is 95%.

3. The control rod assembly of claim 1, wherein the control rod assembly is used under boric acid-free operating conditions.
